# EUROPEAN PATENT APPLICATION

(11) **EP 1 544 816 A1**
(43) Date of publication of application: **22.06.2005**
(21) Application number: 03078945.7
(22) Date of filing: 12.12.2003
(51) Int. Cl.: G07F 19/00

(54) **Method and system for authorising computer network rendered services**

(71) Applicant: Finport B.V., 1081 KL Amsterdam (NL)
(72) Inventor: Heyns, Guido Laurentius Clementina Maria, 3210 Linden (BE)
(74) Representative: Prins, Adrianus Willem, Mr. Ir.

(57) **Abstract**

Method for authorising computer network services such as purchases, payments and the like using a system comprising at least one central computer and at least one peripheral computer connected to said central computer and at least one telephone, wherein via said peripheral computer a service or product is offered, wherein a consumer chooses said service or product for purchase by identifying said product or service to said central computer, preferably via said peripheral computer, whereby on said peripheral computer the consumer enters a telephone number which is forwarded to said central computer, where after the consumer contacts the central computer using the telephone, having said telephone set in number recognition mode, such that his telephone number is sent to said central computer, whereby the central computer compares the telephone number sent by said consumer with the telephone number entered on said peripheral computer and when these match the said service is authorised.

## Description

The invention relates to a method for authorising electronic services such as computer network rendered services. The invention especially relates to such method for authorising purchases, payments and such transactions via a computer network such as internet or similar (mobile) networks such as GPRS, WAP or UMTS or for access to for example voting systems or apparatuses.

Services to be purchased or payments to be made via networks such as the internet need to be authorised in order to assure that the services are delivered to the right customer and/or will be paid, especially by said customer.

It is known to pay for services via internet by credit card. A customer has to provide his or her credit card number and some personal information like name, address and date of expiry of said card. These credentials will be checked in a relevant databank and if correct the payment will be authorised. This is a cumbersome method which is moreover insecure since credit card numbers are frequently stolen, together with said credentials and sold for illegal purposes.

Furthermore it is known to authorise purchases and payments via internet via a telephone. In such known method a customer will have to enter his or her telephone number on a website which will be forwarded to a central computer. The customer will be called by the central computer, in which call he or she will be asked to provide for example a security code, purchase criteria and the like. The information provided will be checked by said central computer using a database filled with such information. This method has the disadvantage that a telephone call has to be made for actively exchanging information, incurring costs. Moreover, personal information has to be stored in a central computer for enabling authorisation.

The known methods and systems for payment are complex, time consuming and costly and are especially unsuited for relatively small payments, low cost transactions or for example access procedures.

The present invention aims to provide a method for authorising electronic services such as computer network services in which at least a number of the disadvantages of the known methods is prevented. Examples of such services can be purchases, payments and the like, access authorisation, identification and the like.

A further object of the present invention is to provide such method which is easy in use and does not incur extra costs for telephone calls or the like.

A further object of the present invention is to provide such method in which a user does not have to provide information actively by telephone.

A still further object of the present invention is to provide for such method in which the use of a credit card will not have to be necessary.

Some of these and further advantages are provided for by a method according to the present invention as characterised by the features of claim 1.

In a method according to the present invention a consumer enters a telephone number in a central computer which can be compared to a telephone number which is recognised by the central computer when the consumer contacts the central computer via his or her telephone when a service is to be authorised. The central computer is provided with a telephone recognition module to perform a comparison between the telephone number present in the central computer and the telephone ID of the telephone with which the consumer contacts said central computer. No actual call has to be placed since the central computer, especially the telephone recognition module.

In a preferred embodiment the consumer enters his or her telephone number into the central computer, preferably via a peripheral computer, when he or she would like to obtain a service or product, make a payment or money transfer, gain access to an electronic service such as a voting system, an apparatus or the like activity. This telephone number, together with specific information about the activity to be performed is sent to the central computer. The customer then contacts the central computer with his or her telephone having associated to it the number which was entered via the peripheral computer. Preferably the number recognition mode of said telephone is switched on. The central computer is provided with a telephone number recognition module and can therefore recognise the telephone number of the telephone contacting said central computer and can compare this with the number entered through the peripheral computer. If these two match authorisation of the desired service will be obtained.

If a financial transaction is authorised the central computer will initiate and/or facilitate such transaction, for example by appropriate amendments to a e-account associated to said telephone number, to the customer or via an instruction sent to a bank or credit card company or the like.

Number recognition mode is a known feature of telephone systems in which a callers telephone number will be made available on the telephone of an intended addressee. The addressee can then, without "picking up the phone" recognise who is calling and for example decide whether or not to actually accept the call by "picking up the phone" and establishing an open communication line for speech or data transfer.

In an alternative embodiment the telephone ID such as the telephone number of a specific consumer is entered into a database in or connected to the central computer, together with an ID such as an alias, code or the like which is associated to said telephone number. When said consumer wants a service to be authorised later on he or she can enter said ID into the central computer and then contact the central computer with the relevant telephone. The telephone recognition module will again recognise the telephone and compare the telephone ID such as the telephone number with the telephone ID stored in the database associated with the telephone ID entered into the telephone recognition module.

In stead of direct recognition by the said telephone recognition mode of a telephone number of a telephone having the telephone number recognition mode switched on other means can be used for recognition of said telephone. For example the telephone ID (CLI) can be obtained through a telephone operator when the telephone recognition mode (CLI mode) is not switched on. Preferably the consumer can authorise the telephone operator to provide the relevant telephone ID (CLI) to the central computer.

Since the telephone ID of the telephone making contact (caller) is recognised by the telephone recognition module (addressee) no actual call has to be made by the customer and/or the central computer. In this respect "making contact" or "contacting" or words of that effect have to be understood as dialling the appropriate number of the central computer, without establishing said open communication line, whereas "placing a call" or "call" or words to that effect have to be understood as establishing such open communication line between the telephone and the central computer, for example for speaking, transferring data such as a pin code or messaging such as SMS. In the present system only the number of said telephone is recognised and compared with a number available in said central computer, preferably entered via said peripheral computer. This means that no telephone call costs are inferred for making said contact and authorising said service.

In this specification telephone number has to be understood as encompassing any telephone ID recognisable by the telephone recognition module automatically, without placing a call as defined here above. A telephone recognition module has to be understood as including telephone number recognition module and is a module for recognition a telephone ID without establishing a call as defined here above. A peripheral computer is to be understood as any electronic equipment with which a telephone ID or alias can be entered into a central computer and can at least be a computer such as a PC, a hand held computer, a telephone, especially a telephone with WAP, GPRS, UMTS or internet access or such electronic means.

Preferably a mobile telephone is used in a method according to the present invention, although other telephones like a fixed net telephone or an IP telephone could also be used.

In a further preferred embodiment a time span is set, preferably by said central computer, within which the central computer has to be contacted by said telephone after entering said telephone number in said peripheral; computer. If said contact is not made within said time span, the authorisation will be denied. This prevents open-end connections and transactions, computer overloads by a large number of waiting, non-finished transactions and increases security.

Preferably a (virtual) button is shown on said peripheral computer for initiating said authorisation. Upon actuating said button a screen is presented on said peripheral computer for entering said telephone number. A screen is to be understood as for example an electronic form to be filled out, an e-mail or the like.

In a method according to the present invention an electronic account (E-account) can be assigned to said telephone number, costs being associated with said service being deducted from or added to said account upon authorisation. This can minimize or even prevent any contact to be made between the central computer and for example a bank. A customer associated with said telephone number can transfer assets to and from said E-account in a known manner, for example via internet banking or using a method according to the present invention.

In a method according to the present invention each time, when an authorisation of a service is required, a telephone number can be entered into the central computer through a peripheral computer. However, it is also possible to permanently enter said telephone number into said central computer, such that for authorisation only said contact has to be made by said telephone for number recognition.

The present invention further relates to a system for authorizing electronic services such as computer network rendered services. Such system can according to the present invention be characterised by the features of claim 11.

Such system, which can for example be (part of) the internet, comprises a number recognition module, such that the ID of a telephone can be recognized by the central computer and can be compared, in a number comparison module. This enables a comparison between the number recognized and a number known to said central computer, for example because said number has been entered previously. If these two numbers match a service required can be authorized. Preferably a telephone is used having the number recognition mode switched on.

Matching has to be understood as at least encompassing said numbers being identical. However, a match can also be understood as complying with a different protocol, for example if said telephone number recognized by said number recognition module is according to said protocol associated with a code such as a consumers ID known to said central computer, which code has been entered previously by the customer, or has been assigned to said customer through said central computer.

A system according to the present invention preferably comprises a timer setting a maximum time between entering said telephone number through a peripheral computer and recognition of said telephone number by said number recognition module. If said time is exceeded no authorisation will be given.

In a system according to the present invention preferably a data base is provided comprising telephone numbers and E-accounts, associated with said telephone numbers. This provides for easy transfer of money for settlement of costs, payments and the like transactions, whereas for example easy checks can be made available for credit-worthiness of a customer. Moreover, such (E) accounts provide a customer with a safe account which can easily be managed.

A system according to the present invention preferably comprises means for connecting to a mobile telephone network.

Different products or services may be identifiable by different product or service telephone numbers. A consumer can then chose a service or product by contacting the central computer through the relevant service or product telephone number, setting off the described comparison for authorisation. The same method or system can also be used for authorising access to for example a website, a vending machine or other apparatus or the like electronic services.

The present invention further relates to use of number recognition mode of a telephone in authorizing computer related activities.

Using number recognition mode for such authorisations has the advantage that no costs are incurred whereas said telephone number is a number unique to said telephone preventing an authorized access and authorisations.

For a better understanding of the present invention embodiments of the present invention will be elucidated hereafter with reference to the drawings. These show:
Fig. 1 schematically a system according to the present invention;
Fig. 1A a screen for entering a telephone number on the peripheral computer of a system according to Fig. 1;
Fig. 2 (a mobile) phone in number recognition mode (eigen nummer zenden); and
fig. 3 an alternative embodiment of a system according to the present invention.

In the description the same or corresponding parts and features will be assigned the same or corresponding reference signs. The embodiments shown of the present invention should not be considered as limiting the scope in any way and are only given by way of example.

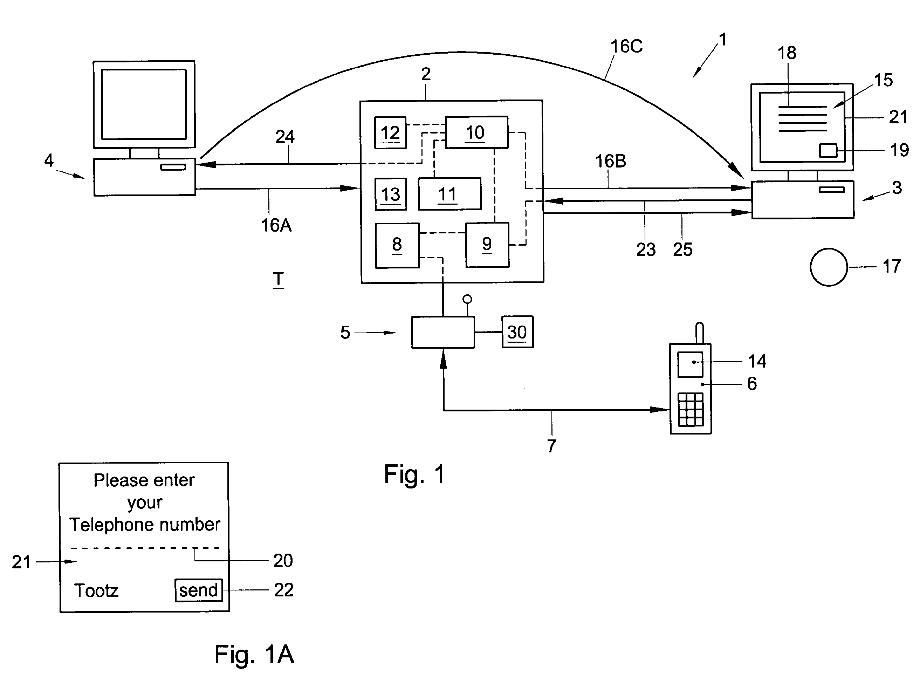

Fig. 1 shows a system 1 according to the present invention, comprising a central computer 2, a peripheral computer 3 and a suppliers computer 4. The system 1 may be part of a computer network such as internet. A large number of peripheral computers 3 and/or suppliers computers 4 may be connected to the central computer 2 or a series of central computers 2, connected to each other by said network such as internet.

In the embodiment shown of a system 1, the central computer 2 is connected to a telephone network 5, for example a mobile telephone network for connecting a mobile telephone 6 to said central computer 2, as indicated by the contact line 7.

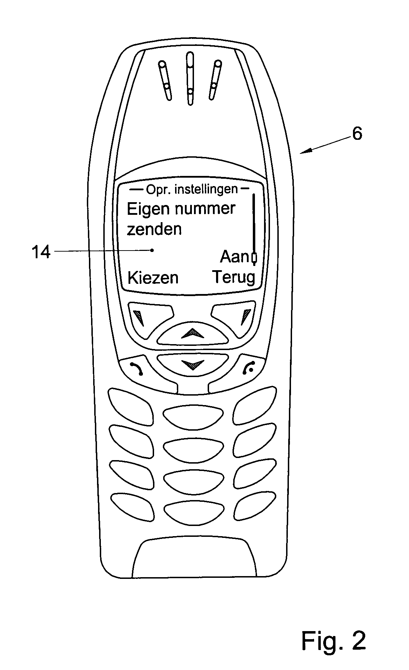

The central computer 2 comprises a telephone number recognition module (TNRM) 8, a telephone number comparison module (TNCM) 9, an authentication module 10, a database 11 and a timer 12. Furthermore, preferably a central processing unit (CPU) 13 is provided for management of the processes within said central computer. The telephone 6 is equipped with means for switching on a number recognition mode (NRM). Number recognition mode is a known feature of telephone systems enabling an addressee to see who is calling without actually picking up the telephone for answering a call. Fig. 2 shows of a mobile phone 6 the screen 14 showing "eigen nummer zenden", switched "aan" (send own number on).

The TNRM 8 has to be understood as any means for recognising a telephone ID, which can be represented by or associated to a telephone number The TNCM 9 has to be understood as any means designed for comparison of telephone ID's such as telephone numbers. As a peripheral computer 3 any electronic means can be used suitable for entering a consumers ID such as an alias, a telephone number or the like into said central computer and/or services or products can be offered to a consumer.

A system 1 according to the present invention as shown in fig. 1 and 2 can be used as follows.

A supplier supplies through his supplier computer 4 and the central computer 2, a website 15 to a peripheral computer 3. This can be done through the central computer 2, as shown by lines 16A and 16B and/or directly through the internet or any other suitable means as indicated by line 16C. A consumer 17 is presented with website 15 on which a service 18 is presented, for example products to be purchased. On the website 15, furthermore a virtual button 19 is presented which can be activated by a mouse click, keyboard or similar, well-known means. The button 19 activates a form 20 to be shown on the screen 21 of the peripheral computer 3, for example as part of the website 15, on which form 20 the consumer 17 is requested to enter his telephone number on a specific field 21. By activating a send button 22 said form 20, at least the telephone number on the field 21, will be transferred to the central computer 2, as indicated by line 23. The consumer 17 is then requested to make contact with the central computer 2 through his telephone 6 in number recognition mode (NRM), within a preset time span, timed by a timer 12 in the central computer 2, for reasons to be discussed. Said time span can for example be a number of minutes, for example five minutes, which timer may be shown counting up or down on the screen 21.

When the requested contact is made to the central computer 2 by the telephone 6 within said time span, the telephone number of the telephone 6, presented to the central computer 2 by the NRM, will be recognized by TNRM 8. Said telephone number recognized is transferred form the TNRM 8 to the TNCM 9, in which also the telephone number is entered from the form 20. In the TNCM 9 the telephone number entered through the form 20 is compared with the telephone number recognized by the TNRM. If these two telephone numbers match, a signal is transferred to the authorisation module 10, which will then authorize the service requested by the consumer 17 to be delivered by the supplier, as indicated by line 24, whereas the consumer 17 may be informed on his peripheral computer 3 of said authorisation, as indicated by line 25.

When the service is authorized by authorisation module 10, the amount of money to be paid for said service by said consumer 17 may be withdrawn from an E-account as registered in the database 11, associated with the telephone number as recognized by the TNRM 8 and/or TNCM 9. At the same time transaction costs may also be transferred from said E-account to the account of the provider of the authorisation service. Preferably by previous agreement. The transaction costs can be born by the consumer, the provider of the product or service rendered or both.

Since the telephone 6 is in NRM no costs are incurred for contacting the central computer 2 by the telephone 6.

When the consumer 17 contacts the central computer 2 with his telephone 6 later than expiry of the time span set and recorded by timer 12, the authorisation module 10 will be blocked from authorizing said service. A consumer 17 will then have to start the operation again. This prevents open end procedures. The consumer 17 may be offered, through said website, the possibility of setting said timer 12 himself.

In an alternative embodiment the database 11 is provided with telephone numbers of known consumers 17 and E-accounts associated therewith, as well as a specific security code, IP-address or the like, which may be entered through a specific peripheral computer 3, each time said consumer 17 wants to use a method according to the present invention for a service through said network. The TNCM 9 may then compare the telephone number recognized by the TNRM 8 with said code, IP-address or the like and/or the telephone number associated thereto in said database 11. This possibility may also be offered to a consumer to his own choice through said peripheral computer 3. Such code or the like and/or the relevant telephone numbers may also be provided to said central computer 2 in a different manner, for example by letter or this may be provided by the provider of the system and/or the supplier.

When the telephone number recognized by the TNRM does not match in any way as described before, the number or code entered through the peripheral computer 3 and/or from the database 11, no authorisation will be given by the authorisation module 10. The consumer 17 and/or the supplier will be informed accordingly. By the CPU 13 the authorisation module 10 may be set to compare the amount available on an E-account associated to a telephone number to the amount necessary for the service required, in order to check the credit-worthiness of the consumer 17. If said credit-worthiness is insufficient the authorisation module 10 may be set to refuse the authorisation and/or to inform the consumer 17 that said E-account has to be raised before said authorisation can be given.

Transaction costs can also be settled through said E-account.

In stead of using a telephone in NRM, the telephone ID can be made available to the central computer 2. at least to the TNRM 8 by other means such as through the telephone operator 30. Preferably the consumer can authorise the telephone operator 30 to provide his or her telephone ID to said central computer 2 for comparison purposes.

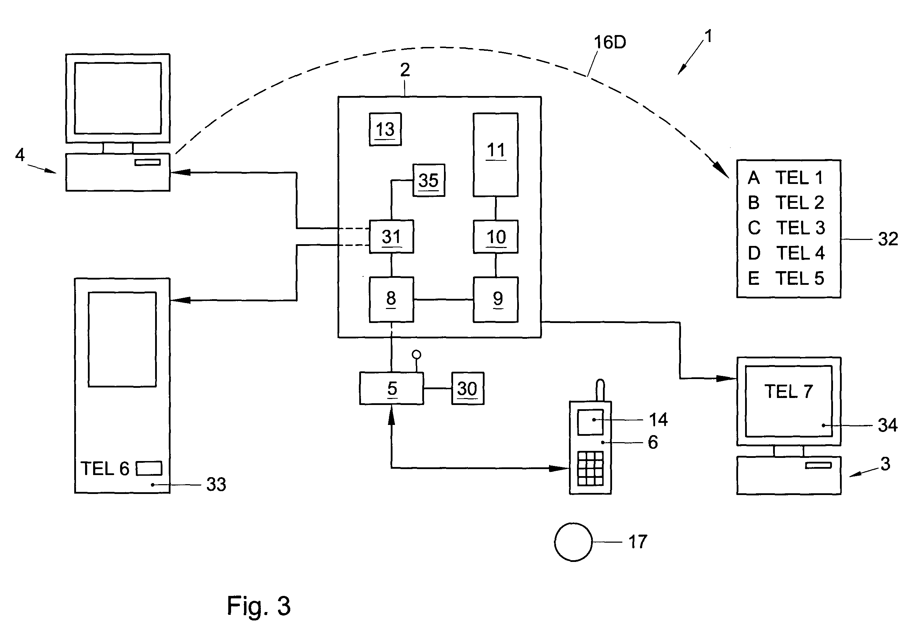

Fig. 3 shows an alternative embodiment of a system 1 and method according to the present invention. In this embodiment the system can be used for voting, access to a web site or access to a vending machine, which possibilities are only shown by way of example.

With reference sign 32 a list of possible choices A - E is shown. To each choice A - E a telephone number TEL1 - TEL5 is assigned. The choices A - E can for example represent possible votes in an election, products or services to be rendered, access codes to databases, apparatuses, web sites or the like. This list 32 can be provided in any form, for example through a supplier computer 4, represented by line 16D, on the screen 14 of the telephone 6, for example by SMS, WAP, GPRS or the like or even in printed form. The consumer 17 chooses one of the choices A - E and contacts the central computer 2 by dialling the relevant telephone number TELL - TEL5. The TNRM 8 will compare the telephone ID such as the telephone number of said telephone 6 with a telephone number in the database 11 and if a comparison in the TNCM 9 leads to authorisation the choice will be transferred to a choice module 31. Transaction costs may be deducted from an E-account associated to said telephone number, as well as any other costs. The choice can for example be a vote in a contest, which may then be sent on to the supplier computer for further administration. The choice A - E can also be an access code to a website on a peripheral computer 3 or to an apparatus such as a vending machine 33. The telephone numbers for said apparatus 33 or a website 34 may also be shown on the apparatus itself (TEL6) or on the computer 3 (TEL7) In a similar manner for example parking costs can be settled or a lot in a lottery can be obtained. The system 1 can also be used for limiting the number of votes to be made by a specific telephone 6, for example by blocking a further choice A - E after a first choice is made with a specific telephone 6.

The list 32 can be present in a data base 35 in the central computer or connected thereto. Each of the product or service telephone numbers TELL - TEL can be connected to a different central computer or to a different TNRM 8 or an algorithm can be provided for recognising the number TELL - TEL7 through which the computer 2 is contacted and transferring such to the module 31.

The present invention is by no means limited to the embodiments shown. Many variations thereof are possible within the scope of the invention. For example a hand held computer or a telephone having internet, WAP, GPRS, UMTS or the like features can be used as peripheral computer for requesting services and/or entering said telephone number into the central computer. Although by way of example a method is described for purchasing products, a system and method according to the present invention may also be used for other services, such as money transfer, video on demand, secure data transfer and the like. A consumer 17 can also be informed about authorisation of a requested service through his telephone 6. Combinations of the systems as shown in the drawings or parts thereof are considered to have been disclosed also. In all embodiments any telephone ID available can be used for comparison and authorisation. Also a computer IP address or the like could be used accordingly.

Any connection in a system or method according to the present invention can be either by wire, cable or fibres or wireless or a combination thereof.

## Claims

1. Method for authorising electronic services such as computer network services using a system comprising at least one central computer and at least one peripheral computer connected to said central computer and/or at least one telephone, wherein a service or product is offered, wherein a consumer chooses said service or product for purchase by identifying said product or service to said central computer, preferably via said peripheral computer, where after the consumer then contacts the central computer using said at least one telephone, such that his telephone ID becomes recognisable to said central computer, whereby the central computer compares the telephone ID sent by said consumer with a telephone ID previously entered into the central computer and when these match the said service is authorised.

2. Method according to claim 1, wherein said telephone ID previously entered into said central computer is entered on said peripheral computer and is forwarded to said central computer, before contacting said central computer by said telephone.

3. Method according to claim 1 or 2, wherein a time span is set in said central computer, whereby the time is measured between entering said telephone number on said peripheral computer and contacting said central computer via said telephone, whereby the central computer can not authorise said service when said time is longer than said time span.

4. Method according to any one of claims 1- 3, wherein said telephone ID previously entered is stored in a database and is associated to an ID such as an alias, such that a consumer can enter said ID such as an alias into the central computer each time he or she wants a service to be authorised, wherein the telephone ID associated to said ID such as an alias will be compared in said central computer with the telephone ID of said telephone.

5. Method according to claim wherein a mobile telephone is used.

6. Method according to any one of the previous claims, whereby a virtual button or a service or product telephone number is shown on said peripheral computer for said authorisation, whereby upon actuating said button a screen is presented on said peripheral computer for entering said telephone number, which can be sent to said central computer or upon dialling said product or service telephone number with said at least one telephone number the authorisation procedure is initiated.

7. Method according to any one of claims 1- 6, whereby a electronic account is assigned to said telephone number, whereby costs associated with said service is deducted from or added to said account upon authorisation.

8. Method according to any one of claims 1- 7, whereby upon authorisation or failure of said authorisation a message is sent to said peripheral computer confirming or rejecting said authorisation.

9. Method according to any one of claims 1 - 8, wherein a telephone is used with number recognition mode switched on.

10. Method according to any one of claims 1 - 9, wherein a number of products or services is offered, wherein at least a number of these products or services is identifiable by a product or service telephone number, whereby the consumer contacts said central computer through one of said product or service telephone numbers, thereby identifying said service or product as chosen.

11. System for authorising computer network rendered services such as purchases, comprising at least one central computer and at least one peripheral computer connected to said central computer and/or at least one telephone, whereby said central computer comprises at least a telephone recognition module and a telephone number comparison module, whereby said telephone number comparison module is designed for comparing a telephone number stored in said central computer with a telephone number entered into said telephone number recognition module by a telephone and authorising or rejecting a service depending on said comparison.

12. System according to claim 11, wherein said central computer comprises a temporary memory for storing a telephone number entered through said peripheral computer, temporarily available for said comparison.

13. System according to claim 11, wherein said central computer comprises or is connected to a database comprising telephone numbers and consumer ID's such as aliases associated thereto, whereby an algorithm is provided for entering into said telephone number comparison module the telephone number associated to a consumers ID entered through said peripheral computer.

14. System according to any one of claims 11 - 13, wherein furthermore a timer is provided for timing the period between entering said telephone number or consumer ID via said at least one peripheral computer and entering said telephone number into said telephone recognition module, whereby said telephone number comparison module comprises a time span setting module, whereby the central computer, preferably the telephone number comparison module and/or the telephone number recognition module are set to refuse authorisation if the time counted by said timer is longer than the time set in said time span setting module.

15. System according to any one of claims 11- 14, whereby the central computer is provided with a database comprising telephone numbers and accounts associated to the telephone numbers.

16. System according to claim 15, whereby the central computer comprises an algorithm to make changes to an account associated to a telephone number when a service is authorised for that telephone number.

17. System according to any one of claims 11 - 16, whereby the central computer comprises means for sending a message to a peripheral computer via which a telephone number has been entered and a service has been required, informing a customer whether an authorisation has been granted or refused.

18. System according to any one of claims 11 - 17, wherein means are provided for connecting to a telephone network, especially a mobile telephone network.

19. System according to any one of claims 11 - 18, wherein a service database is provided comprising a number of service and/or product ID's, a service or product telephone number associated to individual services and/or products in said service database, whereby a consumer can chose a service or product from said service database by contacting the central computer through the associated service or product telephone number.

20. Use of automatic telephone ID recognition, especially number recognition mode of a telephone in authorising computer related activities.
